# EUROPÄISCHE PATENTANMELDUNG

(11) **EP 4 186 830 A1**
(43) Veröffentlichungstag der Anmeldung: **31.05.2023**
(21) Anmeldenummer: 22198487.5
(22) Anmeldetag: 28.09.2022
(51) Int. Cl.: B65G 47/52, B07C 5/36, B65G 47/96

(54) **VORRICHTUNG UND VERFAHREN ZUM FÖRDERN UND SORTIEREN VON WAREN**

(30) Priorität: 29.11.2021 CH 0706152021
(71) Anmelder: FERAG AG, 8340 Hinwil (CH)
(72) Erfinder: Bretz, Markus, 8704 Herrliberg (CH)
(74) Vertreter: IPrime Rentsch Kaelin AG

(57) **Zusammenfassung**

Vorrichtung (110) zum Fördern und Sortieren von Waren, umfassend eine Sortierförderanlage (1) mit einer Transportvorrichtung (100) zum Transport von Waren (60) entlang einer vorgegebenen Förderstrecke (105), wobei sich entlang der vorgegebenen Förderstrecke (105) eine Vielzahl von Abgabeorten (101, 102, 103) befinden, sowie oberhalb der Förderstrecke (105) eine Vielzahl von steuerbaren Druckluftdüsen (50) angeordnet sind, wobei die Transportvorrichtung (100) mindestens zwei miteinander verbundene Fördereinheiten (28) aufweist, die längs zur Förderrichtung (F) um eine erste Drehachse (13) schwenkbare Auflageflächen (19) umfassen, auf denen Waren (60) förderbar und an vorgegebenen Abgabeorten (101, 102, 103) abladbar sind, wobei die Auflageflächen (19) zur Abgabe der Waren (60) gegenüber der Horizontalen geschwenkt werden und das Abrutschen der Waren (60) durch einen Druckluftstrahl (51) der steuerbaren Druckluftdüsen (51) in Richtung der Waren (60) initiiert wird, sodass die Waren (60) schwerkraftgetrieben die Auflagefläche (19) der Fördereinheit am vorgegebenen Abgabeort (101, 102, 103) verlassen.

## Beschreibung

### Gebiet der Technik

Die vorliegende Erfindung bezieht sich auf das Gebiet der Fördertechnik. Sie betrifft eine Vorrichtung und ein Verfahren zum Fördern und Sortieren von Waren mittels Fördereinheiten einer Sortierförderanlage gemäss den Oberbegriffen der unabhängigen Patentansprüche.

### Technologischer Hintergrund

Durch den zunehmenden Online-Handel werden in Umschlagzentren immer grössere Mengen von Waren, wie Artikeln Gegenstände, Pakete oder Güter verarbeitet. Diese grosse Menge an Fördergütern ist eine Herausforderung für die Umschlagzentren. So sollen die Fördergüter in den Umschlagzentren möglichst speditiv verarbeitet werden, damit diese ihren Empfänger schnellstmöglich erreichen.

In den Umschlagzentren werden die eintreffenden Waren in Sortier- und Verteilanlagen eingespeist. Hierzu werden die eintreffenden Waren auf die Auflagefläche von Fördereinheiten eines Sortierförderers abgelegt, welche diese Waren zu einem Abgabeort fördern und diese zur weiteren Verarbeitung abgeben.

Der Sortierförderer kann beispielsweise als sogenannter Kippschalenförderer oder Schwenkplattenförderer ausgebildet sein, welcher zum Abgeben von Waren kippbare Auflageflächen aufweist. Mittels des Kippschalenförderers werden die Waren in Kippschalen an Abgabestellen vorbeigeführt. Vor Erreichen der Abgabestelle werden die Kippschalen über einen Kippmechanismus in eine Schrägstellung versetzt. Sobald die Waren die vorbestimmte Abgabestelle erreicht, wird die Seitenwand der Kippschale geöffnet und die Waren gleitet an der betreffenden Abgabestelle seitlich von der Förderschale ab.

Für die automatische Beförderung und Sortierung von Waren, insbesondere von liegend transportierten Waren, entlang von durch einen Raum geführten Fördereinheiten, sind aus dem Stand der Technik eine Vielzahl von Systemen bekannt. Die Fördereinheiten sind miteinander verkettet und jede Fördereinheit besitzt eine Förderfläche zum Ablegen und Fördern der Waren. Eine Förderfläche kann auch eine Ablagefläche zum Ablegen von Gütern sein. Typischerweise werden hierbei Waren auf Schalen, auf Platten, auf Quergurtbändern, auf Modulbändern oder auch auf Förderbänder abgelegt und liegend gefördert. Die bekannten Sortierförderanlagen besitzen Zuführeinrichtungen zum Zuführen von Waren, die auf Auflageflächen abgelegt werden. Die Waren werden mit den Förderwagen gefördert, bis sie an einen Abgabeplatz gelangen und dort von den Auflageflächenabgegeben werden. Die Sortierung der Waren erfolgt durch bestimmte Auswahlkriterien und durch die Abgabe an vorbestimmte Abgabeplätze.

US 3 463 298 offenbart ein Artikelförderer zum Fördern und Sortieren von Artikel. Artikelförderer werden vorteilhaft für eine Vielzahl von Zwecken eingesetzt. Eine spezifische Anwendung für solche Förderer umfasst ein Sortiersystem, bei dem Artikel mit bestimmten Unterscheidungsmerkmalen auf den Förderer geladen werden. Eine Vielzahl von Entladestationen befindet sich entlang des Förderweges. Es sind Mittel zur selektiven Entladung der Artikel vorgesehen, je nachdem, welche der Entladestationen Artikel mit einem bestimmten Merkmal aufnehmen soll. Diese Förderer werden eingesetzt, wenn sie in der Lage sind, Artikel an verschiedenen Entladestationen automatisch abzugeben. Die Förderer weisen hierbei kippbaren Fördereinheiten auf.

Die DE 697 06 059 T2 bezieht sich auf eine Vorrichtung und ein Verfahren zum Sortieren von Gegenständen. Die Gegenstände werden auf einem flexiblen Endlosband eines Bandförderers gefördert und mit Hilfe einer Vielzahl von Mitteln an verschiedenen Sortiersäcken abgegeben. Diese Mittel umfassen Leseelemente zum Erfassen der Gegenstände, Mittel zum Anheben des Bandes, Mittel zum Aufnehmen der Gegenstände und Mittel zum Blasen von Luft in Richtung entsprechender Mittel zum Aufnehmen der Gegenstände.

DE 1 127 802 offenbart eine Paketsortiermaschine, welche mit einem einfachen endlosen Transportband aus poliertem Blech Pakete fördert und sortiert. Eine Bedienperson legt dazu die zu verteilenden Gegenstände auf das Band, welches die Gegenstände fortbewegt. Sobald ein Gegenstand das Fach (Rinne oder Behälter), für welches dieser bestimmt ist, erreicht, öffnet sich ein Ventil, aus dem Druckluft ausströmt, die auf den Gegenstand gerichtet ist. Der Gegenstand wird mit der erforderlichen Kraft in den Bestimmungsbehälter befördert. Die Ventile sind neben dem Förderband angeordnet und blasen den Gegenstand vom Band herunter in den Behälter hinein. Einzig der Druckluftstrahl führt den Gegenstand am Bestimmungsort in den Behälter.

US 2009/0272624 A1 offenbart eine Fördervorrichtung zum Sortieren einer Vielzahl von Gegenständen, welche Vorrichtung ein Förderband umfasst, dass eine Auflagefläche mit einem ersten Ende und einem zweiten Ende aufweist, welches Band dazu geeignet ist, eine Vielzahl von Gegenständen von dem ersten Ende zu dem zweiten Ende zu transportieren. Des Weiteren umfasst die Fördervorrichtung einen Elektromotor, der das Förderband bewegen kann, eine Vorrichtung zur Erzeugung eines Luftstroms, die neben dem Förderband angeordnet ist, und eine Steuerung, die ein Signal an die Vorrichtung zur Erzeugung eines Luftstroms sendet, um einen Luftstrom zu erzeugen, der geeignet ist, mindestens eines der Vielzahl von Objekten vom Förderband weg zu befördern.

US 2019/077611 A1 offenbart eine Rotationssortiermaschine für kugelförmige Produkte, bestehend aus einem Hauptrahmen mit einer kreisförmigen horizontalen Platte mit einer Aussenrand-Nockenfläche. Ein kreisförmiger Unterrahmen ist um die vertikale Achse der Platte parallel zu dieser drehbar gelagert. Der Unterrahmen enthält mehrere an seinem Umfang schwenkbar angebrachte Produktschalen. Die Nockenfläche kippt die Schalen aus einer angehobenen Ladeposition in eine horizontale Sichtposition und in eine abgesenkte Auswurfposition. Eine Ladezone umfasst Mittel zum Laden eines einzelnen Produkts in einen entsprechenden Becher. Eine Sichtzone verfügt über Kameramittel zur optischen Betrachtung der einzelnen Produkte, während diese zentrifugalkraftbedingt durch den Becher rollen, und erzeugt ein Ausgangssignal, das den Reflexionseigenschaften entspricht. Ein Computer vergleicht das Ausgangssignal mit vorgegebenen Werten und erzeugt ein entsprechendes Auswurfsignal. Eine Umlenkzone umfasst mehrere Auswerfer, wobei ein ausgewählter Auswerfer das Produkt in Reaktion auf ein Auswurfsignal aus dem entsprechenden Becher auswirft. Förderer in Anlagen zum Sortieren werden kontinuierlich betrieben, so dass die Waren während der Bewegung des Sortierförderers zugeführt werden und anschliessend auch abgegeben werden. Da die Waren unterschiedliche Grössen, Gewichte, Oberflächen, Formen und Elastizitäten besitzen, ist es notwendig, die Waren präzise in die Fördereinheiten des Förderers zu platzieren. Es kann vorkommen, dass Waren schlechte Reibungseigenschaften aufweisen und an der geneigten Auflagefläche nicht von allein abrutschen. Ausserdem können falsch abgelegte oder falsch positionierte Waren zu Beschädigungen an der Ware selbst oder an der Anlage führen oder die weitere Verarbeitung der Waren verschlechtern.

Es gibt Waren, bei denen die Reibkraft zu hoch ist und das Schrägstellen der Auflagefläche nicht ausreicht, um die Haftreibung der Waren zu überwinden. Die Einwirkung der Schwerkraft auf die Ware reicht also nicht aus, um den Rutschvorgang auf der schräg gestellten Auflagefläche zu starten. Diese Waren können unter Umständen nicht sicher und exakt an dem Abgabeort abgegeben werden. Ebenso ist es bei Förderanlagen mit Druckluftdüsen, welche aus dem Stand der Technik bekannt sind und Waren mit hoher Reibkraft befördern, notwendig einen hohen Druck zu verwenden, um die Waren an dem Abgabeort abzugeben.

Um den konstruktiven Aufwand zu reduzieren und den Betrieb dieser Sortierförderer zu verbessern, besonders die Genauigkeit bei der Abgabe der Waren, sowie den Verschleiss zu minimieren, besteht das Bedürfnis nach Fortschritt in diesem Gebiet der Technik.

Es ist daher Aufgabe der vorliegenden Erfindung neue Lösungen bereitzustellen, welche den Nachteilen des Standes der Technik entgegenwirken und welche Waren mit hoher Reibkraft effizient, sicher und exakt befördern können.

### Darstellung der Erfindung

Gemäss der vorliegenden Erfindung werden mindestens einzelne der Nachteile aus dem Stande der Technik beseitigt und es wird eine Förder- und Sortieranlage geschaffen, welche einen hohen Automatisierungsgrad ermöglicht, mit optimierter Ausgestaltung der Abgabe von Waren ab mehreren oder einer Vielzahl von Abgabeorten. Vorteilhafte Ausführungsformen sind in der Beschreibung vorgesehen und ergeben sich namentlich aus den Patentansprüchen.

Die erfindungsgemässe Lösung kann durch verschiedene, jeweils für sich vorteilhafte und, sofern nicht anders ausgeführt, auf verschiedene Weise miteinander kombinierbare Ausgestaltungen weiter verbessert werden. Auf diese Ausführungsformen und die mit ihnen verbundenen Vorteile wird im Folgenden eingegangen.

Ein wesentlicher Aspekt der vorliegenden Erfindung, betrifft eine Vorrichtung zum Fördern und Sortieren von Waren bereitzustellen, umfassend Sortierförderanlage mit einer Transportvorrichtung zum Transport von Waren entlang einer vorgegebenen Förderstrecke, wobei sich entlang der vorgegebenen Förderstrecke eine Vielzahl von Abgabeorten befinden.

Die Transportvorrichtung weist mindestens zwei miteinander verbundene Fördereinheiten auf, welche mit einer längs zur Förderrichtung um eine Drehachse schwenkbaren Auflagefläche ausgebildet sind, auf dem Waren förderbar und an einem vorgegebenen Abgabeort abladbar sind. Oberhalb der Förderstrecke ist bei der Sortierförderanlage eine Vielzahl von steuerbaren Druckluftdüsen angeordnet.

Zur Abgabe der Ware wird die Auflagefläche gegenüber der Horizontalen geschwenkt und das Abrutschen der Ware durch einen Druckluftstrahl der steuerbaren Druckluftdüsen in Richtung der Waren initiiert, so dass die Ware schwerkraftgetrieben die Auflagefläche der Fördereinheit am vorgegebenen Abgabeort verlässt.

Die Sortierförderanlage kann als eine Kippschalensortieranlage mit an den Fördereinheiten schwenkbar angeordneten Kippschalen ausgebildet sein, welche die Auflageflächen für die Warenausbilden. Die Kippschale kann eine unterhalb zur Auflagefläche befindliche Drehachse aufweisen, die längs zur Förderrichtung ausgerichtet ist, insbesondere längs zur Förderrichtung fluchtend ausgerichtet ist. Die Sortierförderanlage kann in weiteren möglichen Ausführungsformen als Fallklappensorter, Plattenkettenförderer und/ oder als weiteres dem Fachmann bekanntes Fördersystem realisiert werden.

Die Fördereinheiten sind bevorzugt miteinander verkettet, insbesondere sind zwei aufeinander folgende Fördereinheiten miteinander verkettet, so dass die Fördereinheiten eine endlose Förderstrecke bilden. Die Förderstrecke ist hierbei beliebig auslegbar, besonders bevorzugt ist jedoch eine 3-dimensional im Raum orientierte Förderstrecke. Eine erfindungsgemässe Förderstrecke ist nicht zwingend kreisförmig oder als Karussell ausgebildet, die Förderstrecke kann aber Kreissegmente beinhalten.

Die Vielzahl von steuerbaren Druckluftdüsen, die oberhalb der Förderstrecke angeordnet sind, können ortsfest oberhalb der schwenkbaren bzw. ortsfest oberhalb der geschwenkten Auflageflächen angeordnet seien.

Die steuerbaren Druckluftdüsen können mittig über der Förderstrecke der Transportvorrichtung angeordnet sein und im Wesentlichen nach unten gerichtet sein, vorzugsweise schräg nach unten, insbesondere in Richtung der Schwerkraft.

Die steuerbaren Druckluftdüsen können aber auch im Wesentlichen in Richtung der schräggestellten Auflageflächen gerichtet sein. Der Druckluftstrahl kann direkt auf die Auflagefläche gerichtet sein. Die Oberflächenstruktur der Auflagefläche kann die Unterströmung der Luft unter der Ware gestatten, so dass deren Haftreibung überwunden werden kann. Der Druckluftstrahl der Druckluftdüsen verkürzt den Abrutschvorgang der Warezeitlich.

Der Druckluftstrahl der Druckluftdüsen kann so gerichtet sein, das Luft unter die Ware geleitet wird, so dass sich die Haftreibung zwischen der Auflagefläche und der Ware reduziert, um ein Abrutschen der Ware zu ermöglichen oder zumindest auszulösen. Es ist durchaus möglich, dass die Warenanschliessend auf einem Luftpolster entlang der Auflagefläche abgleiten. Durch die optimale Wahl der Oberflächenstruktur, wie zum Beispiel Furchen, Kanäle, Rillen, Noppen, Stege oder Vertiefungen kann der Neigungswinkel der Auflagefläche reduziert werden, bei Beibehaltung einer sicheren und exakten Abgabe der Ware am Abgabeort. Bevorzugt kommt in der Erfindung aber eine metallische oder metallisch beschichtete Auflagefläche zum Einsatz, die eine geeignete Haftreibung und einen nach oben weisenden Aussenrand aufweist, damit die zugeführten Waren nicht ungewollt von der Auflagefläche wegrutschen, jedoch mittels des Druckluftstrahls die Waren von der Auflagefläche abrutschen können. In noch weiteren Ausführungen können die Auflageflächen als Förderflächen ausgebildet sein, wobei die Förderflächen Mittel aufweisen, um Waren auf der Förderfläche zu positionieren, wie beispielsweise Rollenförderer, Förderbänder oder ähnliche dem Fachmann bekannte Lösungen.

Der Druckluftstrahl der Druckluftdüsen erzeugt eine Blaskraft auf die Ware, die in Kombination mit dem Einwirken der Schwerkraft zu einer Erhöhung der Abrutschgeschwindigkeit führt, welche ein sicheres Abgeben der Ware am Abgabeort ermöglicht.

Der Druckluftstrahl der Druckluftdüsen kann von einem Ablenkelement in Richtung der Ware abgelenkt werden und so auf das Abrutschen der Ware unterstützend einwirken.

Nachgeschaltet an einer Beladestation, welche die Beladung der Fördereinheiten der Transportvorrichtung mit Waren erlaubt, ist eine Sensorvorrichtung angeordnet, die zur Erfassung Informationen, insbesondere von Merkmalen oder Eigenschaften, der geförderten Waren dient.

Die Zuordnung der Abgabeorte der Waren wird durch die erfassten Informationen, insbesondere Merkmalen und/oder Eigenschaften, durch die Sensorvorrichtung mitbestimmt, oder zumindest mit beeinflusst.

Die Transportvorrichtung der vorliegenden Erfindung umfasst eine Vielzahl von Fördereinheiten, welche in einer möglichen Ausführung aus einer Vielzahl von auf Führungsschienen bewegten und miteinander verbundenen Förderwagen bestehen. Die Förderwagen transportieren die Waren entlang der Förderstrecke und umfassen Transporteinheiten mit schwenkbarer Förderschale. Die Förderschalen können hierbei mit schwenkbaren Seitenwänden ausgebildet sein, sodass die Waren bei geeigneter Neigung und Druckluft von den Auflageflächen der Förderschalen abrutschen können. Die Auflageflächen können in weiteren möglichen Ausführungen eine Oberflächenstrukturen oder ähnliche Merkmale aufweisen, welche eine besonders vorteilhafte Luftleitung des Druckluftstrahles der Druckluftdüsen ermöglichen und dadurch auf die Überwindung der Haftreibung der Waren auf der Auflagefläche unterstützend einwirken. Die Auflageflächen sind dabei nicht auf die hier aufgelisteten Ausführungsformen beschränkt. Dem Fachmann ergeben sich aus der Beschreibung und den dazugehörigen Figuren zusätzlich zu den hier offenbarten Beispielen verschiedene weitere Lösungen.

Ein weiterer Aspekt der vorliegenden Erfindung betritt ein Verfahren zum Fördern und Sortieren von Waren mit einer erfindungsgemässen Vorrichtung, umfassend die Schritte:
a) Bereitstellen einer Vorrichtung, insbesondere einer Sortierförderanlage, welche eine Transportvorrichtung und mindestens zwei verbundenen Fördereinheiten umfasst;
b) Ablegen von Waren auf Auflageflächen der mindestens zwei verbundenen Fördereinheiten;
c) Fördern der Waren entlang einer vorgegebenen Förderstrecke;
d) Schwenken der Auflagefläche um eine Drehachse zur Seite der Abgabeorte;
e) Öffnen einer Seitenwand der Fördereinheiten;
f) Auslösen eines Druckluftstrahles mit einer Druckluftdüse in Richtung der Waren zum Initiieren einer Abrutschbewegung der Waren zur Abgabe an den Abgabeorten.

Eine Kombination von Blaskraft und Gewichtskraft wirken auf die Waren und führen zur Abrutschbewegung der Waren von der Auflagefläche, so, dass die Waren am Abgabeort abgegeben werden können.

Die Ermittlung der Abgabeorte für die Warenerfolgt unter Einbeziehung von erfassten Informationen, insbesondere Merkmale und/oder Eigenschaften der geförderten Waren, der Sensorvorrichtung.

Die Sensorvorrichtung kann einzelne oder mehrere Waren Identifizieren, Positionen der Waren, Orientierungen der Waren oder Fehler an den Waren erkennen.

Die Sortierförderanlage kann verkettete Fördereinheiten in Ausgestaltung von Förderwagen besitzen, bei dem die Fördereinheiten eine Auflagefläche aufweisen, die schwenkbar ausgebildet sein kann. Bei Schrägstellung der Auflagefläche bildet diese Fläche eine Rutschfläche aus, auf welcher die Ware abrutschen kann.

Der Neigungswinkel entscheidet darüber, wie gut die Wareabrutscht. Um den konstruktiven Aufwand und den Verschleiss des Schwenkmechanismus zu reduzieren, sollte der Neigungswinkel möglichst gering sein. Bei niedrigen Neigungswinkeln ist aber ein sicheres Abrutschen der Ware nicht sichergestellt, da die verschiedenen Waren unterschiedliche Reibungseigenschaften aufweisen.

Falsch übergebene Ware, die zum Beispiel zwischen den Rändern zweier Schalen liegen, oder auf den Rändern zweier Schalen liegen, oder über den seitlichen Rand der Schale hinausragen, können ermittelt und anschliessend gesondert behandelt werden.

Eine erfindungsgemässe Sortierförderanlage kann zudem eine Identifikations-Sensoreinheit zur Feststellung der Identität von Waren umfassen. Eine solche Identifikations-Sensoreinheit kann in der Sensorvorrichtung integriert sein und erlaubt es, Waren auf den Förderschalen zu identifizieren bzw. deren Identität zu verifizieren, um so beispielsweise fehlerhafte Vorgänge zu vermeiden oder zu korrigieren. Eine Identifikation kann beispielsweise optisch erfolgen, oder durch das Auslesen von Informationsträgern wie beispielsweise ein- oder zweidimensionalen Barcodes, QR-Code oder RFID-Tags.

Die Sensorvorrichtung kann zusätzlich eine optische Sensoreinheit enthalten, welche es ermöglicht die Positions- und Lagebestimmungen der Ware in Bezug auf die Förderschale zu ermitteln.

Erkannte Waren können weiterverarbeitet werden, nicht erkannte Waren können gesondert behandelt werden und wieder der Zufördervorrichtung zugeführt werden.

Erfindungsgemäss kann ein Einleiten oder Initiieren der Rutschbewegung mittels einem Druckluftstrahl einer angesteuerten Druckluftdüse erfolgen, oder das Abrutschen der Warenunterstützend beeinflussen.

Des Weiteren kann durch die gezielte Betätigung der steuerbaren Druckluftdüse die Förderware schnell und exakt am Abgabeort abgegeben werden, selbst wenn der Neigungswinkel klein gehalten wird.

Die ortsfesten steuerbaren Druckluftdüsen sind oberhalb der Fördereinheiten angeordnet. Als Prozessgas kann anstatt Luft auch ein anderes Gas verwendet werden.

Der Druckluftstrahl der ortsfest angeordneten Düsen ist in Richtung der Schwerkraft gerichtet. Die Anordnung der Düse für den Luftdruckstrahl kann sowohl die Auflagefläche einer nach rechts wie auch die Auflagefläche einer nach links geschwenkten Kippschale überstreichen. Die Düsen sind im Wesentlichen in Richtung der schräggestellten Auflage ausgerichtet.

Der Druckluftstoss beziehungsweise der dadurch ausgelöste Druckluftstrom lässt Luft unter die Waren strömen, hierbei wird ein Luftpolster unter der Ware gebildet, woraufhin die Haftreibung überwunden wird und ein Abrutschen der Ware beschleunigt, erleichtert oder zumindest eingeleitet wird.

So bewirken Schwerkraft und Blaskraft in Kombination eine erhöhte Kraft auf die Ware auf der geschwenkten Auflagefläche, so dass diese erhöhte Kraft zusammen eine stärkere Rutschgeschwindigkeit der Ware entstehen lässt und so ein sicheres Abgeben der Ware an den Abgabeort erfolgt.

Dem Fachmann ist ersichtlich, dass die Bewegungsinitiierung der Waren durch den Druckluftstrahl unter gleichzeitiger Einwirkung der Schwerkraft stattfindet. Bei zunehmender Neigung der Auflagefläche übernimmt die Schwerkraft und führt dazu, dass die Waren von der Auflagefläche abrutschen, sodass ein kurzlebiger Druckluftstoss meist ausreicht, um die Haftreibung der Waren auf der Auflagefläche zu überwinden.

Zur besseren Ausnutzung des Druckluftstrahls kann in der Nähe der Druckluftdüse ein Ablenkelement positioniert sein, welches den Druckluftstrahl in Richtung oder zumindest teilweise in Richtung der Wareablenkt.

Ein Ablenkelement kann auch bei einer Druckluftdüse für zwei gegenüberliegenden Ablageorte genutzt werden um den Druckluftstrahl in Richtung der Wareabzulenken. Hier könnte das Ablenkelement schaltbar ausgestaltet sein, so dass der Druckluftstrahl einmal nach links und ein anderes Mal nach rechts, in Förderrichtung gesehen, abgelenkt werden kann.

Das Ablenkelement kann beweglich ausgebildet sein, so kann es zwischen zwei Positionen geschaltet werden. Zwischen diesen Positionen könnte es durch eine Schwenkbewegung hin und her schaltbar gesteuert werden. Alternativ dazu könnte die Druckluftdüse zwischen zwei Positionen schwenkbar geschaltet werden.

Die Warenkönnen auch Gegenstände sein, beispielsweise Säcke, Artikel, Kisten, Pakete, Boxen, Schachteln oder Gebinde und können foliiert oder in Papier eingeschlagen sein. Die Waren können mit Identifizierungsmittel versehen sein, wie zum Beispiel Barcode, QR-Code, RFID Tags oder dergleichen.

Nach dem Überprüfen der Waren wird jede Wareeinem Abgabeort zugewiesen bzw. zugeordnet. Die Waren werden auf der Auflagefläche zum zugeordneten Abgabeort gefördert und dort zu weiteren Verarbeitung abgegeben. Zur Abgabe der Waren können ihnen gezielte Abgabeorte zugeordnet sein, welche die Waren zur Beladestation zurückführen, wenn sie nicht erkannt wurden oder nicht zugeordnet werden konnten oder nicht optimal auf der Auflagefläche aufliegen. Auch zur Vermeidung von Abgabefehlern oder zur Vermeidung nachfolgende Fehler können Waren einem speziellen Abgabeort zugewiesen werden.

Ein Abgabeort kann vorgesehen sein, um beschädigte, fehlgeleitete, schlecht positionierte oder nicht erkannte Waren abzugeben. Diese Waren können einer gesonderten Weiterverarbeitung zugeführt werden.

Um den Verbrauch des Volumen der Druckluft zu reduzieren, sollte der Druckluftstrahl bzw. der Druckluftstoss zeitlich kurzgehalten werden, da der Abrutschvorgang insbesondere nur initiieren werden muss.

Ein Vorteil der Erfindung liegt darin, dass mit dem Einwirken von Druckluft auf die Waren die Schrägstellung der Auflagefläche reduziert werden kann. Dies erlaubt die Realisierung einfacherer Schwenkmechanismen und verringert den Verschleiss bei den Komponenten des Schwenkmechanismus bei geringeren Schwenkwinkel.

Durch die genauere und schnellere Abgabe der Waren kann die Sortierförderanlage bei höherer Geschwindigkeit betrieben werden, so dass eine grössere Sortierleistung erreicht werden kann.

### Beschreibung der Figuren

Zum besseren Verständnis der vorliegenden Erfindung wird nachfolgend auf die Zeichnungen Bezug genommen. Diese zeigen lediglich Ausführungsbeispiele des Erfindungsgegenstands und sind nicht dazu geeignet, die Erfindung auf die hierin offenbarten Merkmale zu beschränken. Für gleiche oder gleich wirkende Teile werden in den nachfolgenden Figuren und der dazugehörigen Beschreibung gleiche oder ähnliche Bezugszeichen verwendet. Es zeigen:
- Fig. 1: eine schematisch dargestellte erfindungsgemässe Sortierförderanlage,
- Fig. 2: einen Förderwagen der erfindungsgemässen Sortierförderanlage mit einer schwenkbaren Förderschale,
- Fig. 3: zwei hintereinander angeordnete Förderwagen in Entladeposition,
- Fig. 4: weitere Förderwagen in Entladeposition, und
- Fig. 5: Förderwagen in der Entladeposition mit Druckluftunterstützung während der Abgabe.

### Wege zur Ausführung der Erfindung

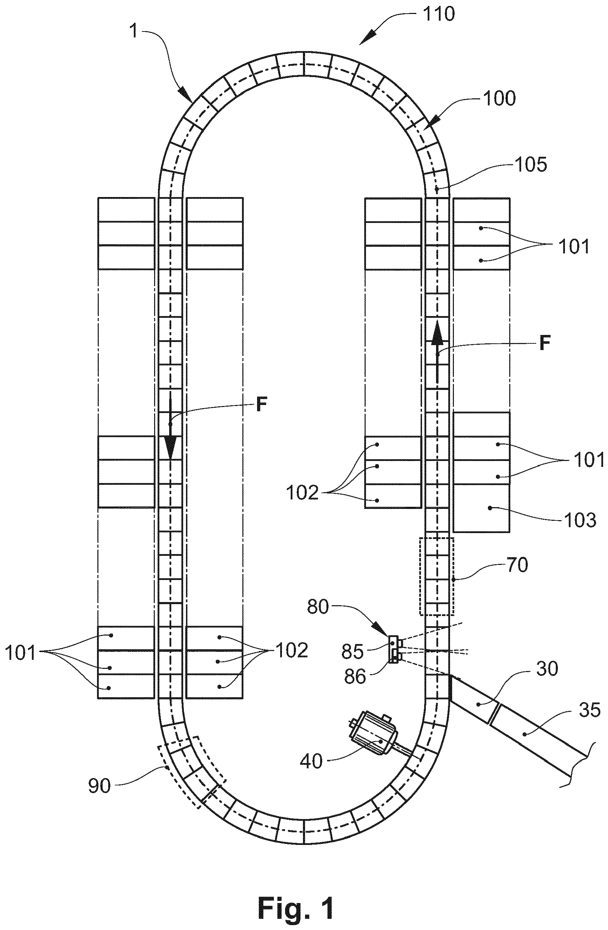

**Figur 1** zeigt ein Ausführungsbeispiel der erfindungsgemässen Vorrichtung 110 in Form einer Sortierförderanlage 1. Diese Sortierförderanlage 1 besteht aus einer Transportvorrichtung 100 zum Transport der Fördergüter von der Beladestation 30 zu den Abgabeorten in Gestalt von Abgaberutschen 101, 102, 103. Am Ende der Abgaberutschen 101, 102, 103 können beispielsweise Sammelkisten oder Sammelsäcke hier nicht gezeigt die Waren 60 aufnehmen. Die Abgaberutschen 101, 102, 103 können auch als Förderbänder konzipiert sein, welche die Waren 60 einer Weiterverarbeitung zuführen. Die Transportvorrichtung 100 ist aus einer Vielzahl von Fördereinheiten 28 zusammengestellt. Bei diesem Ausführungsbeispiel besteht die Transportvorrichtung 100 aus endlos miteinander verketteten Fördereinheiten 28, die aus einer Vielzahl von auf Führungsschienen 12bewegten Laufwagen bestehen und Transporteinheiten 15, 15a mit schwenkbaren Förderschalen 18 umfassen. Angetrieben wird die Transportvorrichtung 100 durch einen Motor 40, der die verketteten Transporteinheiten 15, 15a in Förderrichtung F bewegt und in der dargestellten Ausführungsform der Beladestation 30 vorgeschaltet ist.

Der Beladestation 30 ist eine Zufördervorrichtung 35 vorgeschaltet, welche Waren 60 zur Transportvorrichtung 100 fördert, so dass ankommende Fördergüter mittels der Beladestation 30 auf die Förderschalen 18 der Transporteinheiten 15, 15a abgegeben werden können. Die Waren 60 werden hierbei auf die Auflageflächen 19 der Förderschalen 18 abgelegt. Nach dem Übergeben der Waren 60 auf die Auflagefläche 19 der Transporteinheit 15, 15a werden sie in Förderrichtung F längs der Förderstrecke 105 gefördert. Die abgelegten Waren 60 werden an einer Sensorvorrichtung 80 vorbeigeführt, welche Merkmale und/oder Eigenschaften der Waren 60 über Sensoren ermittelt. Mit einer optischen Sensoreinheit 85 ist es möglich auch Positions- und Lagebestimmungen der Waren 60 in Bezug auf die Förderschale 18 zu ermitteln. Mittels einer Identifizierungssensoreinheit 86 ist es möglich die Erkennung der Waren 60 mittels Identifikationsmittel 61 welche an den geförderten Waren 60 angebracht sind zu erkennen. Die ermittelten Informationen der Sensorvorrichtung 80 können zur Bestimmung der Abgabeorte 101, 102, 103 für die Waren 60 hinzugezogen werden. Nicht erkannte oder schlecht abgelegte Waren 60, welche einer Sortierung der Waren erschweren oder behindern, werden einem speziellen Abgabeort 101, 102, 103zugeordnet, so dass diese Waren 60 der Zufördervorrichtung 35 wieder zugeführt werden können. Der Abgabeort 101, 102, 103kann besonders gross ausgebildet sein, da in dem Fall, dass eine Ware 60 auf den Rändern zweier Förderschalen 18 liegt, müssen beide Förderschalen 18 gleichzeitig entladen werden.

Nach der Sensorvorrichtung 80 werden die schwenkbaren Förderschalen 18 mittels der Aufrichtvorrichtung 70 langsam aufgerichtet. Hierzu wird die Förderschale 18 in Uhrzeigerrichtung nach rechts geschwenkt, wenn die Waren 60 nach rechts in Förderrichtung F abgegeben werden soll. Die Förderschale 18 kann aber auch in Gegenuhrzeigerrichtung nach links geschwenkt werden, wenn die Ware nach links in Förderrichtung F abgegeben werden soll. Durch das Schwenken der Förderschale 18 wird auch die Auflagefläche 19, auf dem die Ware 60 liegt, schräg gestellt. Die meisten Waren 60 rutschen nun an den untenliegenden Rand der Förderschale 18 und werden von der Seitenwand 16 gestoppt. Erreicht die geförderte Ware 60 den vorbestimmten Abgabeort 101, 102, 103, wird die Seitenwand 16 mit einer schaltbaren Öffnungsmittel 25 geöffnet, so dass die Ware 60 von der Auflagefläche 19 abrutschen kann. Gleichzeitig, oder zeitlich versetzt dazu wird ein Druckluftventil geöffnet, so dass eine Druckluftdüse 50 einen Druckluftstrahl 51 in Richtung auf den oben liegenden Bereich der Ware 60 abgibt. Dieser Druckluftstrahl oder Druckluftstoss 51 unterstützt das Abrutschen der Ware60 von der Auflagefläche 19, oder initiiert zumindest das Abrutschen.

Nach den Abgabeorten 101, 102, 103 folgt die horizontale Ausrichtung der Förderschalen 18 mit Hilfe einer Ausrichtevorrichtung 90. Beim Durchlaufen der Ausrichtevorrichtung 90 werden die Förderschalen 18 zurück in die Horizontalen gedreht und anschliessend werden die Seitenwände 16 nach oben geschwenkt und in der Vertikalen wieder arretiert. Die Transporteinheiten 15, 15a werden in die Aufnahmestellung gebracht, so, dass sie beim Erreichen der Beladestation 30 wieder mit neuen Waren 60 beladen werden können.

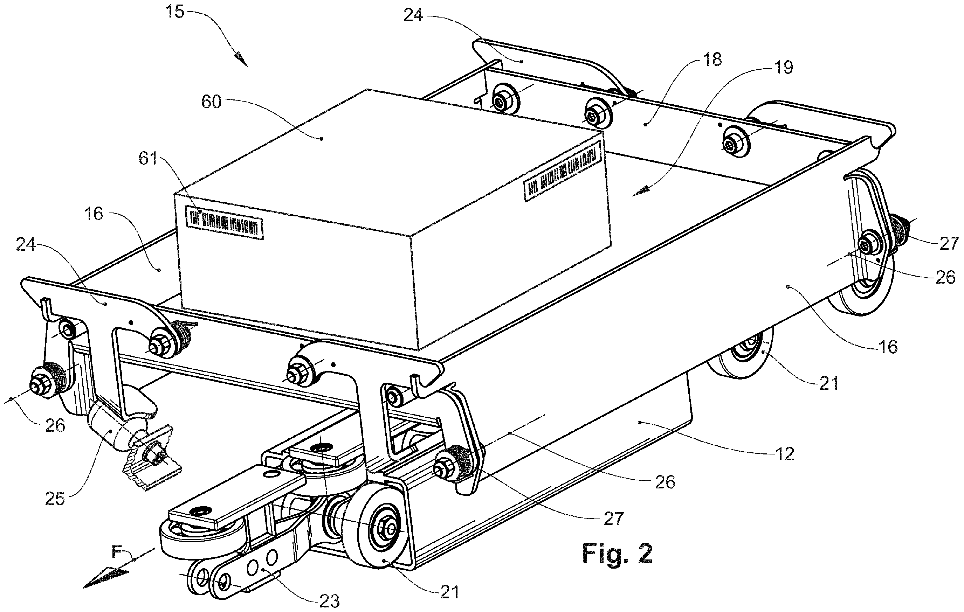

**Figur 2** zeigt ein Ausführungsbeispiel einer Transporteinheit 15, 15a für den Einsatz in einer Sortierförderanlage 1. In der Führungsschiene 12 laufen mit Rollen 21 geführte Kettenglieder 23. An den Kettengliedern 23 sind schwenkbare Förderschalen 18 montiert. Diese Förderschalen 18 besitzen jeweils eine Auflagefläche 19 auf dem Waren 60 mitgenommen werden können. Die Auflagefläche 19 wird seitlich begrenzt durch schwenkbare Seitenwände 16. Die Seitenwände 16 sind um eine zweite Drehachse 26 drehbar an der Förderschale 18 angeordnet. Ein arretierter Bügel 24 hält die Seitenwand 16 in einer aufrechten, geschlossenen Stellung. Mittels einem schaltbaren Öffnungsmittel 25 kann der arretierte Bügel 24 aufgeschwenkt werden, so dass die Seitenwand 16 durch eine vorgespante Drehfeder 27 aufgeschwenkt wird. Beim Aufschwenken bzw. beim Öffnen der Seitenwand 16 kann die Ware 60 von der Auflagefläche 19 der Fördereinheit 28 abrutschen und an einen bestimmten Abgabeort 101, 102, 103 abgegeben werden. Die geförderten Waren 60 tragen Identifikationsmittel 61 um eine eindeutige Zuordnung zu gewährleisten. In diesem Beispiel trägt die Ware 60 mehrere Identifikationsmittel 61.

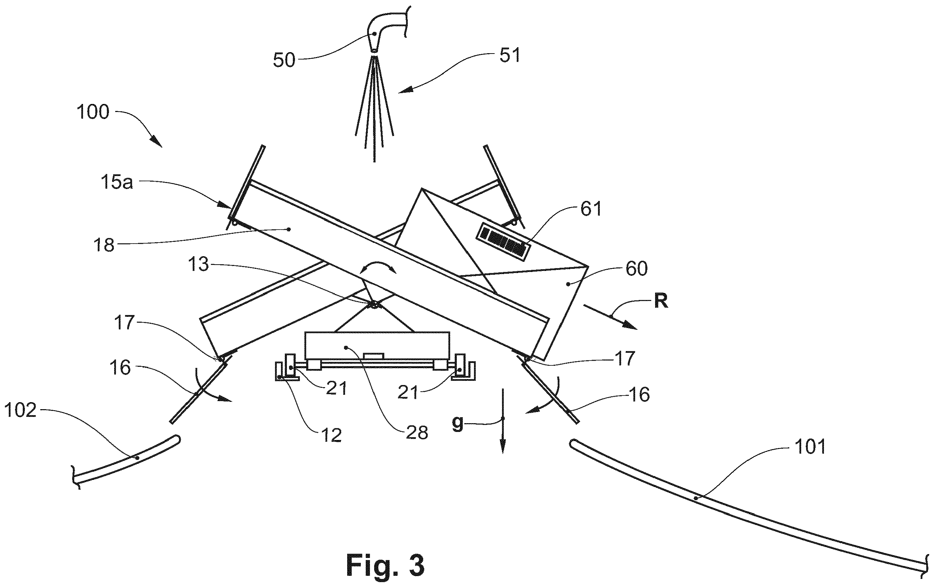

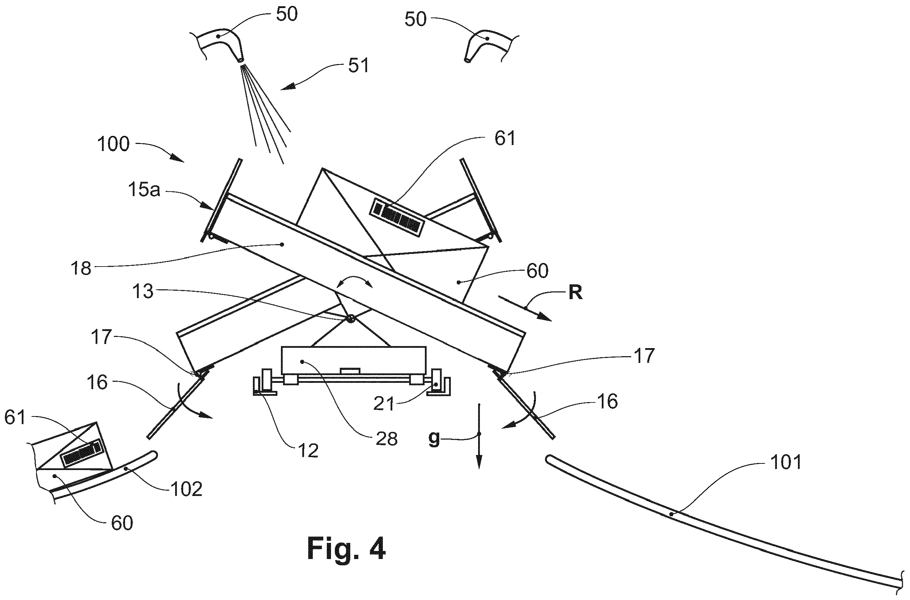

**Figur 3** und **Figur 4** zeigen weitere Ausführungsbeispiele der Erfindung. Die Transportvorrichtung 100 besteht aus verketteten Transporteinheiten 15, 15a. Die Transporteinheit 15, 15a ist zusammengestellt aus einer Fördereinheit in Form eines Förderwagens 28 und einer Förderschale 18 welche über eine erste Drehachse 13 miteinander verbunden sind. Der Förderwagen 28 läuft mit seinen Rollen 21 auf den Führungsschienen 12 längs der Förderstrecke 105. Durch die erste Drehachse 13 kann die Förderschale 18 der Transporteinheit 15, 15a bezogen auf die Fahrtrichtung nach rechts oder nach links schwenken. Bevor die Transporteinheit 15, 15a mit der geförderten Ware 60 den Abgabeort 101, 102, 103 erreicht, wird die Förderschale 18 in Richtung des Abgabeortes 101, 102, 103 geschwenkt, so dass die Auflagefläche 19 zur Seite des Abgabeortes 101, 102, 103 geneigt ist. Die Ware 60 kann nun schwerkraftgetrieben zur tiefer liegende Seitenwand 16 rutschen, wenn die Haftreibung überwunden werden kann.

Am Abgabeort 101, 102, 103 wird die tiefer liegende Seitenwand 16 geöffnet, indem die Seitenwand 16 um das Drehgelenk 17 nach unten schwenkt. Der Weg ist nun für die Ware 60 frei, um die Förderschale 18 zu verlassen. Ist der Neigungswinkel zu gering, oder die Haftreibung zu hoch bleibt die Ware 60 liegen, oder rutscht nur sehr langsam der Auflagefläche 19 entlang, so dass die Ware 60 gar nicht oder zu spät abgegeben wird. Um dieses zu verhindern, erfolgt mit der Druckluftdüse 50 ein zeitlich abgestimmter Druckluftstrahl bzw. ein Druckluftstoss 51 um das Abrutschen der Ware 60 zu beschleunigen oder zumindest zu starten. Hierdurch kann die Ware 60 nun auf der Auflagefläche 19 in Richtung R rutschen und die Förderschale 18 verlassen und die Abgaberutsche 101, 102, 103 erreichen.

In **Figur 3** wird für je zwei gegenüberliegende Abgaberutschen 101, 102, 103 eine Druckluftdüse 50 zum Einsatz gebracht. Die Druckluftdüse 50 ist oberhalb der Förderwagen bzw. der Fördereinheiten 28 angebracht und jeweils mittig zwischen den Rutschen der Abgaberutsche 101, 102, 103 positioniert. Der Druckluftstrahl 51 ist nach unten auf die Mitte der Förderschale 18 gerichtet. Hierdurch kann die Ware 60 sowohl nach rechts in Förderrichtung F wie auch nach links in Förderrichtung F abgegeben werden. Der Druckluftstrahl 51 kann insbesondere senkrecht nach unten gerichtet sein.

In **Figur 4** wird für je zwei gegenüberliegende Abgaberutschen 101, 102, 103 zwei separate Druckluftdüsen 50 zum Einsatz gebracht. Die Druckluftdüsen 50 sind oberhalb der Förderwagen 28 bzw. der Transporteinheiten 15, 15a angebracht und jeweils versetzt zur Mitte zwischen den Abgaberutschen 101, 102, 103 positioniert. Der Druckluftstrahl 51 ist schräg nach unten auf die geneigte Auflagefläche 19 der Förderschale 18 gerichtet. Hierdurch kann der Druckluftstrahl 51 direkt auf die Ware 60 wirken wie auch indirekt von der Auflagefläche 19 hin zur Ware 60. Somit kann ein Teil des Luftstromes unter die Ware 60 gelangen und ein Luftpolster ausbilden, auf dem ein Heruntergleiten der Ware 60 von der Auflagefläche 19 erfolgen kann. Somit ist je eine Druckluftdüse 50 für die Abgaberutsche 101 und eine weitere Druckluftdüse 50 für die Abgaberutsche 102 zugeordnet.

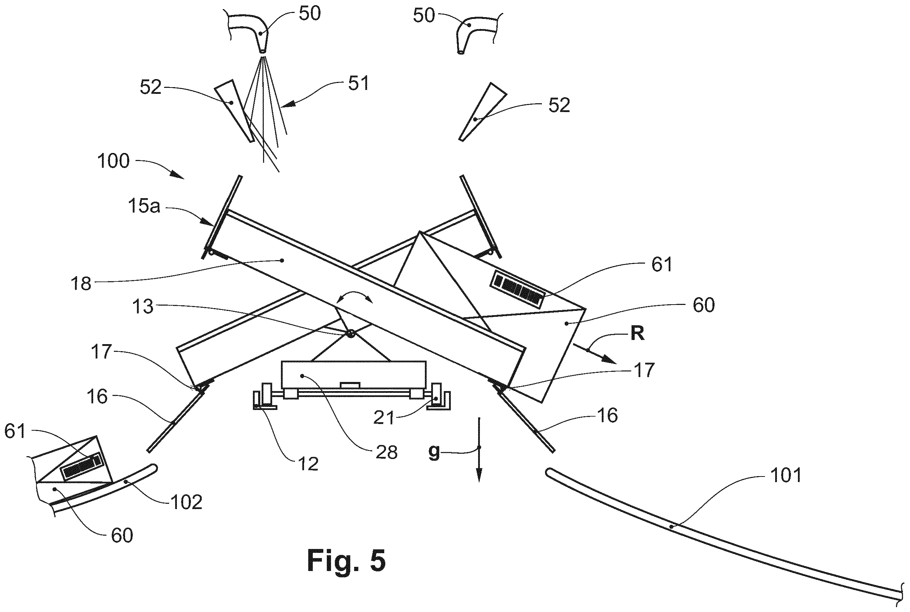

In **Figur 5** werden für je zwei gegenüberliegende Abgaberutschen 101, 102, 103 zwei separate Druckluftdüsen 50 zum Einsatz gebracht. Die Druckluftdüsen 50 sind oberhalb der Förderwagen 28 bzw. der Transporteinheiten 15, 15a angebracht und jeweils versetzt zur Mitte zwischen den Abgaberutschen 101, 102, 103 positioniert. Der Druckluftstrahl 51 ist nach unten auf die geneigte Auflagefläche 19 der Förderschale 18 gerichtet. Hierdurch kann der Druckluftstrahl 51 direkt oder indirekt auf die Waren 60 wirken. Zur besseren Ausnutzung des Druckluftstrahls 51 ist in der Nähe der Druckluftdüse 50 ein Ablenkelement 52 positioniert, welches der Druckluftstrahl 51 in Richtung der Ware 60 ablenkt oder zumindest teilweise in Richtung der Ware 60 ablenkt. Ein Ablenkelement 52 kann auch bei einer Druckluftdüse 50 genutzt werden, um den Druckluftstrahl 51 in Richtung der Ware 60 abzulenken. Ablenkelemente 52 könnten auch schaltbar ausgestalte sein, so dass der Druckluftstrahl 51 einmal nach links und ein anderes Mal nach rechts abgelenkt werden kann, oder falls beispielsweise eine Düsenanordnung wie in Figur 3 gewählt wurde, die Druckluftdüse 50 selbst schwenkbar ausgebildet ist.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen.

## Patentansprüche

1. Vorrichtung (110) zum Fördern und Sortieren von Waren, umfassend eine Sortierförderanlage (1) mit einer Transportvorrichtung (100) zum Transport von Waren (60) entlang einer vorgegebenen Förderstrecke (105), wobei sich entlang der vorgegebenen Förderstrecke (105) eine Vielzahl von Abgabeorten (101, 102, 103) befinden, sowie oberhalb der Förderstrecke (105) eine Vielzahl von steuerbaren Druckluftdüsen (50) angeordnet sind, wobei die Transportvorrichtung (100) mindestens zwei miteinander verbundene Fördereinheiten (28) aufweist, die längs zur Förderrichtung (F) um eine erste Drehachse (13) schwenkbare Auflageflächen (19) umfassen, auf denen Waren (60) förderbar und an vorgegebenen Abgabeorten (101, 102, 103) abladbar sind,
**dadurch gekennzeichnet, dass**
die Auflageflächen (19) zur Abgabe der Waren (60) gegenüber der Horizontalen geschwenkt werden und das Abrutschen der Waren (60) durch einen Druckluftstrahl (51) der steuerbaren Druckluftdüsen (51) in Richtung der Waren (60) initiiert wird, sodass die Waren (60) schwerkraftgetrieben die Auflagefläche (19) der Fördereinheit am vorgegebenen Abgabeort (101, 102, 103) verlassen.

2. Vorrichtung (110) nach Anspruch 1, **dadurch gekennzeichnet, dass** die Sortierförderanlage (1) als Kippschalensortierer mit an den Fördereinheiten (28) schwenkbar angeordneten Förderschalen, insbesondere Kippschalen (18) ausgestaltet ist, welche die Auflageflächen (19) für die Waren ausbilden.

3. Vorrichtung (110) nach Anspruch 1 oder 2, **dadurch gekennzeichnet, dass** die steuerbaren Druckluftdüsen (50) oberhalb der schwenkbaren bzw. ortsfest oberhalb der geschwenkten Auflageflächen (19) angeordnet sind.

4. Vorrichtung (110) nach einem der Ansprüche 1 bis 3, **dadurch gekennzeichnet, dass** die steuerbaren Druckluftdüsen (50) mittig über der Förderstrecke (105) der Transportvorrichtung (100) angeordnet sind.

5. Vorrichtung (110) nach einem der Ansprüche 1 bis 4, **dadurch gekennzeichnet, dass** die steuerbaren Druckluftdüsen (50) im Wesentlichen nach unten gerichtet sind, vorzugsweise schräg nach unten und insbesondere in Richtung der Schwerkraft (g).

6. Vorrichtung (110) nach einem der Ansprüche 1 bis 5, **dadurch gekennzeichnet, dass** die Druckluftdüsen (50) im Wesentlichen in Richtung der schräggestellten Auflageflächen (19) gerichtet sind.

7. Vorrichtung (110) nach einem der Ansprüche 1 bis 6, **dadurch gekennzeichnet, dass** der Druckluftstrahl (51) der Druckluftdüsen (50) Luft unter die Waren (60) leitet, so dass die Haftreibung zwischen der Auflagefläche (19) und den Waren (60) reduziert wird, um ein Abrutschen der Waren (60) zu ermöglichen oder zumindest auszulösen.

8. Vorrichtung (110) nach einem der Ansprüche 1 bis 7, **dadurch gekennzeichnet, dass** Ablenkelemente (52) derart positioniert sind, dass der Druckluftstrahl (51) der Druckluftdüsen (50) in Richtung der Ware (60) ablenkend und so auf das Abrutschen der Waren (60) unterstützend einwirkt.

9. Vorrichtung (110) nach einem der Ansprüche 1 bis 8, **dadurch gekennzeichnet, dass** nachgeschaltet an einer Beladestation (30), welche die Beladung von Fördereinheiten (28) der Transportvorrichtung (100) mit Waren (60) erlaubt, eine Sensorvorrichtung (80) angeordnet ist, die zur Erfassung von Informationen über die geförderten Waren (60) dient.

10. Vorrichtung (110) nach Anspruch 9, **dadurch gekennzeichnet, dass** die Zuordnung der Abgabeorte (101, 102, 103) der Waren (60) durch die erfassten Informationen der Sensorvorrichtung (80) mitbestimmt, oder zumindest beeinflusst wird.

11. Vorrichtung (110) nach einem der vorigen Ansprüche, **dadurch gekennzeichnet, dass** die Fördereinheiten als Förderwagen (28) ausgebildet sind, welche eine Transporteinheit (15, 15a) mit schwenkbarer Förderschale (19) umfassen, und welche Waren (60) entlang der Förderstrecke (105) transportieren.

12. Verfahren zum Fördern und Sortieren von Waren (60) mit einer Vorrichtung (110) gemäss Anspruch 1, und welche die folgenden Schritte umfasst:
- Bereitstellen einer Vorrichtung (110), insbesondere einer Sortierförderanlage (1), welche eine Transportvorrichtung (100) und mindestens zwei verkettete Fördereinheiten (28) umfasst;
- Ablegen von Waren (60) auf Auflageflächen (19) der mindestens zwei verketteten Fördereinheiten (28);
- Fördern der Waren (60) entlang einer vorgegebenen Förderstrecke (28);
- Schwenken der Auflageflächen (19) um eine erste Drehachse (13) zur Seite von Abgabeorten (101, 102, 103);
- Öffnen einer Seitenwand der Fördereinheiten (28); und
- Auslösen eines Druckluftstrahles (51) mit Druckluftdüsen (50) in Richtung der Waren (60) zum Initiieren einer Abrutschbewegung der Waren (60) zur Abgabe an den Abgabeorten (101, 102, 103).

13. Verfahren zum Fördern und Sortieren von Waren (60) nach Anspruch 13, **dadurch gekennzeichnet, dass** eine Kombination von Blaskraft und Gewichtskraft auf die Waren (60) einwirken und zur Abrutschbewegung der Waren (60) von der Auflagefläche (19) führen, so dass die Waren (60) an den Abgabeorten (101, 102, 103) abgegeben werden.

14. Verfahren zum Fördern und Sortieren von Waren (60) nach Anspruch 14, **dadurch gekennzeichnet, dass** eine Ermittlung der Abgabeorte (101, 102, 103) für die Waren (60) unter Einbeziehung von erfassten Informationen einer Sensorvorrichtung (80) erfolgt.
